# EUROPÄISCHE PATENTSCHRIFT

(11) **EP 0 315 824 B1**
(45) Veröffentlichungstag und Bekanntmachung des Hinweises auf die Patenterteilung: **14.07.1993**
(21) Anmeldenummer: 88117772.9
(22) Anmeldetag: 25.10.1988
(51) Int. Cl.: G02B 6/44

(54) **Metallfreies selbsttragendes optisches Kabel**
Metalfree self-supporting optical cable
Câble optique auto-supportant sans metal

(30) Priorität: 28.10.1987 DE 3736529
(43) Veröffentlichungstag der Anmeldung: 17.05.1989
(73) Patentinhaber: SIEMENS AKTIENGESELLSCHAFT, 80333 München (DE)
(72) Erfinder: Oestreich, Ulrich, Dipl.-Ing., D-8000 München 71 (DE)

(56) Entgegenhaltungen:
- EP-A- 0 214 480
- DE-A- 2 948 853
- DE-A- 3 118 172
- DE-A- 3 618 659

## Beschreibung

Die Erfindung betrifft ein metallfreies aus Kabelseele und Kabelmantel bestehendes selbsttragendes optisches Kabel für die Verwendung als Luftkabel im Feldbereich zwischen den Phasenseilen einer Hochspannungsfreileitung, bei dem die Kabelseile schwach elektrisch leitend ausgebildet ist und als tragendes Element ein Tragkörper in Form mindestens einer Lage hochfesten Filamentmaterials vorgesehen ist.

Es ist bekannt, optische Luftkabel im Bereich von Hochspannungs-Freileitungen anzuordnen. Ein Kabel dieser Art ist in der DE-A1 35 04 041 beschrieben. Dabei sind mehrere Lichtwellenleiter im Inneren einer rohrförmigen Schutzhülle untergebracht, wobei sie in eine Füllmasse aus weichem nachgiebigen pastösen Material eingebettet sind. Auf dieser Schutzhülle ist mindestens eine Lage eines hochzugfesten Filamentmaterials, insbesondere in Form eines Aramidgarnes aufgebracht. Die so gebildete Kabelseele wird außen von einem Kabelmantel umschlossen.

Aus der EP-A2 02 14 480 ist es bekannt, ein in Feldbereich zwischen den Phasenseilen einer Hochspannungsfreileitung angeordnetes optisches Kabel in seiner Kabelseele schwach elektrisch leitend auszubilden und zwar derart, daß der spezifische Widerstand der Kabelseele zwischen 10⁵Ω·cm und 10¹⁰Ω·cm liegt. Auf diese Weise lassen sich unerwünschte Schädigungen des Mantels durch äußere oder innere Teilentladungen oder Kriechströme weitgehend vermeiden.

Das hochzugfeste Filamentmaterial wird, insbesondere dann, wenn es sich um Aramidgarne handelt, zweckmäßig vorgedehnt und radial so weit wie möglich komprimiert, d. h. in einer dichten Lage aufgebracht. Diese Maßnahmen sind wichtig, um die Anfangs- oder "Setz"-dehnung des Filamentmaterials weitgehend vorwegzunehmen, einen elektrisch quasi homogenen, ggf. schwach leitfähigen Körper zu erhalten und das sichere Abspannen des Kabels auf einer nicht nachgiebigen Unterlage zur ermöglichen.

Für das komprimierende Bandagieren des Filamentmaterials wurde bisher eine Polyester-Folie verwendet, welche um das Filamentmaterial herumgeschlagen und in Längsrichtung sich überlappend angeordnet wurde. Eine solche Art der Bandagierung und Komprimierung des Filamentmaterials hat eine Reihe von Nachteilen. Zum einen sind die für diese Zwecke zu verwendenden Folien relativ teuer. Außerdem neigen die Folien zur Faltenbildung oder können sogar reißen. Bei der Herstellung ergibt sich der Nachteil, daß das feste Aufbringen der Folie nur mit mäßiger Geschwindigkeit möglich ist. Folienscheiben haben eine sehr begrenzte Lauflänge (Vorratslänge) und zwingen deshalb zu häufigem Anhalten des Fertigungsprozesses. Deshalb können die Folie und der Mantel nicht in einem Arbeitsgang aufgebracht werden, sondern erfordern zwei aufeinanderfolgende Herstellungsvorgänge. Ein weiterer Nachteil, welcher bei Luftkabeln im Bereich elektrischer Felder von besonderer Bedeutung ist, besteht darin, daß derartige Folien relativ gute Isoliereigenschaften haben und somit einen störenden Isolator zwischen dem normalerweise weit niederohmigeren Filamentmaterial und dem kriechstromfesten Außenmantel darstellt. Beispielsweise zeigen Aramidgarne oder Fasern entsprechend der EP-A2 02 14 580 einen spezifischen Widerstand in der Größenordnung von 10⁷ Ω·cm, wobei für den Außenmantel mit Widerstandswerten in der Größenordnung von 10¹⁰Ω·cm gerechnet werden kann. Folien aus Polyestermaterial oder anderen infrage kommenden Materialien weisen dagegen einen spezifischen Widerstand in der Größenordnung von 10¹⁴ - 10¹⁸Ω·cm auf und bilden somit eine Isolierschicht zwischen dem im gewissen Umfang leitfähigen Mantel und dem weit stärker leitfähigen Filamentmaterial der Kabelseele aus Aramidgarnen. Eine solche Struktur kann bei entsprechenden Feldstärken zu Teilentladungen an der Folie führen.

Der vorliegenden Erfindung liegt die Aufgabe zugrunde, einen Weg aufzuzeigen, auf dem eine möglichst dicke Packung des Filamentmaterials gewährleistet werden kann und hochohmige Isolationsschichten, ein zu großer Aufwand bei der Herstellung und nachteilige Eigenschaften des fertigen Kabels vermieden werden können. Gemäß der Erfindung wird dies bei einem Kabel der eingangs genannten Art dadurch erreicht, daß das Filamentmaterial von einer außen fest aufgebrachten, aus einem Material mit zumindest ähnlichen elektrischen Eigenschaften wie das Filamentmaterial bestehenden Bandage zusammengehalten ist, welche mit einer wesentlich kürzeren Schlaglänge als die des Filamentmaterials aufgebracht ist.

Durch die dichsitzende und fest aufgebrachte Bandage wird eine sichere Kompression des Filamentmaterials erreicht, sowie eine sichere elektrische und mechanische Verbindung von Tragkörper und Mantel gewährleistet. Durch die Verwendung von band- oder fadenförmigen Bandagen lassen sich sehr große Lauflängen erzielen, so daß ein Anhalten der Fertigungseinrichtung überflüssig wird. Außerdem kann die Aufbringung der Bandage unmittelbar vor der Aufbringung des Außenmantels erfolgen, so daß die Herstellung des optischen Kabels in einem einzigen Arbeitsgang durchgeführt werden kann. Ein weiterer Vorteil besteht darin, daß schnell laufende Garnwickler eingesetzt werden können. Außerdem ergibt sich noch der Vorteil, daß das Mantelmaterial auf der Bandagierung gut verankert ist und auch an dem darunterliegenden Filamentmaterial haftet. Durch die zumindest ähnlichen elektrischen Eigenschaften zwischen Bandage und Filamentmaterial bildet die Bandage keine hochisolierende Zwischenschicht und es ergeben sich keine Probleme im Bereich elektrischer Felder.

Eine besonders vorteilhafte Lösung für die Aufbringung der Bandage besteht darin, diese doppelgängig und gekreuzt aufzubringen.

Während bei einer einfachen (einlagigen) Bandagierung für die Bandage ein Steigerungswinkel in der Größenordnung zwischen 10° und 15° zweckmäßig ist, wird bei einer doppelgängigen (gekreuzten) Bandagierung mit einem Steigungswinkel zwischen 20° und 30° gearbeitet (doppelte Geschwindigkeit beim Aufbringen). Die doppelgängige gekreuzte Aufbringung der Bandage hat auch den Vorteil, daß kein resultierender Drehmoment auftritt und eine noch höhere Verdichtung erreicht wird.

Das Filamentmaterial selbst hat einen möglichst großen Steigungswinkel, vorzugsweise um 85° (zwischen 75° und 90°).

Die Erfindung und ihre Weiterbildungen werden nachfolgend anhand einer Zeichnung näher erläutert, in der ein gemäß der Erfindung aufgebautes optisches Luftkabel OC in stufenförmig abgesetzter Form dargestellt ist. Eine Reihe von Lichtwellenleitern LW1 bis LWn sind im Inneren einer Schutzhülle SH untergebracht, die aus extrudiertem Material, vorzugsweise hochfesten Spritzgußmaterial hoher Beständigkeit (z. B. aromatisch substiniertem PA, PBTP, PC usw.) besteht. Es ist zweckmäßig den Innenraum der Schutzhülle SH mit einer pastösen oder weichen teivernetzten Füllmasse zu füllen, um das Eindringen von Wasser zu verhindern und außerdem eine mechanisch schonende Einbettung der empfindlichen Lichtwellenleiter LW1 bis LWn zu erzielen.

Anstelle einer einzigen Schutzhülle SH können auch mehrere derartige Schutzhüllen (Hohladern) im Innerbereich des optischen Kabels OC angeordnet sein.

Um eine ausreichende Zugfestigkeit zu erreichen, welche für die Anordnung als Luftkabel unerlässlich ist, wird ein Tragkörper TK vorgesehen, welcher in Form eines Filamentmaterials in einer oder mehreren Lagen auf der Schuzthülle SH angeordnet ist. Der Steigungswinkel ∝ für das Filamentmaterial des Tragkörpers TK beträgt zweckmäßig etwa zwischen 80 und 90°, wobei Werte von ca. 85° als besonderes zweckmäßig anzusehen sind. Diese großen Steigungswinkel sind deswegen erforderlich, um die nötige Zugfestigkeit des Filamentmaterials auszunutzen. Bevorzugt werden für das Filamentmaterial Aramidgarne eingesetzt, die vor oder beim Aufbringen vorgedehnt werden und vor allem dann eine gute Zugfestigkeit ergeben, wenn sie in radialer Richtung so weit wie möglich komprimiert sind. Eine starke Komprimierung ist auch deswegen zweckmäßig, weil dadurch ein elektrisch quasihomogener Tragkörper erhalten wird. Das dicht gepackte Filamentmaterial des Tragkörpers TK ist relativ niederohmig und zwar mit einem spezifischen Widerstand in der Größenordnung zwischen 10⁵ Ω·cm und 10¹⁰ Ω·cm (vorzugsweise um 10⁷ Ω·cm). Dies kann insbesondere dadurch erreicht werden, daß hochfeste Kunststoff- oder Glasfilamente oder Mischungen aus beiden mit einer ionogenen Oberfläche vorgesehen werden. Außerdem ist es möglich, eine ionogene Schicht auf die eigentlichen Kunststoff-oder Glasfäden des Filamentmaterials aufzubringen oder Filamente einzusetzen, die mit Quellpulver oder einer ionogenen Beschichtung versehen sind. Nähere Einzelheiten hierzu sind in der DE-A2 02 14 480 beschrieben.

Zur dichten Packung des Filamentmaterials des Tragkörpers TK ist eine Bandage vorgesehen, welche mit einem wesentlich kleineren Steigungswinkel ß aufgebracht ist und zwar liegt ß zwischen 1/3 und 1/10 des Steigungswinkels des Filamentmaterials des eigentlichen Tragkörper TK. Die Bandagierung und damit Komprimierung des aus Filamentmaterial bestehenden Tragkörpers TK kann z. B. mit einer einzigen Lage BD1 z. B. in Form eines Aramidfaden oder Glasfadens oder dünnen Bandes erfolgen, wobei bei einlagiger Bandagierung der Steigungswinkel β zweckmäßig zwischen 10° und 15° zu wählen.

In vielen Fällen ist es zweckmäßig eine zweite (hier gestrichelt angedeutete) Bandagierung BD2 vorzusehen. Bei einer derartig doppelgängig gekreuzten Bewicklung kann der Steigungswinkel ß größer gehalten werden, wobei Werte zwischen 20° und 30° zweckmäßig sind.

Die Bandagen BD1 und BD2 bestehen ebenfalls aus Materialien mit zumindest ähnlichen Eigenschaften wie das Filamentmaterial, insbesondere auch hinsichtlich des geringeren spezifischen ohmschen Widerstandes. Es sollte zwischen dem spezifischen Widerstand des Tragkörpers TK und dem spezifischen Widerstand des für die Bandagen BD1 und Bd2 verwendeten Materials möglichst kein all zu großer Unterschied bestehen. Der Tragkörper Tk und auch die Bandagen BD1 und BD2 haben spezifische Widerstände zwischen 10⁵ und 10¹⁰ Ω·cm. Am einfachsten wird für den Tragkörper Tk und die Bandagen BD1 und BD2 das gleiche Grundmaterial verwendet, das (zur Verringerung des spezifischen Widerstandes) der gleichen oder ähnlichen Behandlung ( z. B. Imprägnierung mit ionogenen Material) unterworfen wird.

Auf die Kabelseele KS ist ein Außenmantel AM aufgebracht, der zweckmäßig ebenfalls schwach leitend ausgebildet ist (spezifischer Widerstand zwischen 10⁷ und 10¹² Ω·cm). Der Isolationswiderstand des gesamten optischen Kabels OC sollte zwischen 10¹⁰ und 10⁷ Ω/m liegen.

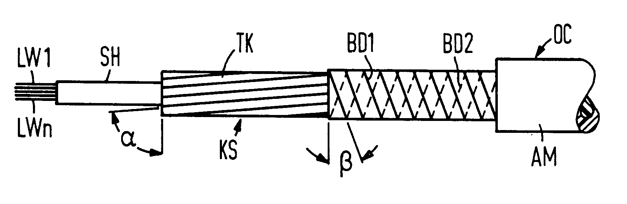

## Patentansprüche

1. Metallfreies aus Kabelseele und Kabelmantel bestehendes selbsttragendes optisches Kabel (OK) für die Verwendung als Luftkabel im Feldbereich zwischen den Phasenseilen einer Hochspannungsfreileitung, bei dem die Kabelseele schwach elektrisch leitend ausgebildet ist und als tragendes Element ein Tragkörper (TK) in Form mindestens einer Lage aus hochfesten Filamentmaterial vorgesehen ist,
**dadurch gekennzeichnet,**
daß das Filamentmaterial von einer außen fest aufgebrachten Bandage (BD1) zusammengehalten ist, welche aus einem Material mit zumindest ähnlichen elektrischen Eigenschaften besteht und mit einer kürzeren Schlaglänge (β) als die ( α ) des Filamentmaterials aufgebracht ist und daß der spezifische Widerstand des Tragkörpers (TK) und der Bandage (BD1) zwischen 10⁵ und 10¹⁰ Ω·cm, liegt.

2. Optisches Kabel nach Anspruch 1,
**dadurch gekennzeichnet,**
daß das Filamentmaterial des Tragkörpers (TK) mit möglichst großen Steigungswinkel, vorzugsweise um 85°, aufgebracht ist.

3. Optisches Kabel nach einem der vorhergehenden Anprüche,
**dadurch gekennzeichnet,**
daß die Bandage (BD1, BD2) mit einem Steigungswinkel (β) aufgebracht ist, der um den Faktor 1/3 bis 1/10 kleiner ist als der Steigungswinkel (α) des Filamentmaterials des Tragkörpers (TK).

4. Optisches Kabel nach Anspruch 3,
**dadurch gekennzeichnet,**
daß bei eingängier Aufbringung der Bandage diese mit einem Steigungswinkel (β) zwischn 20° und 30° aufgebracht ist.

5. Optisches Kabel nach Anspruch 3,
**dadurch gekennzeichnet,**
daß bei gekreuzter doppelgängiger Aufbringung der Bandagen (BD1, BD2) diese mit einem Steigungswinkel (β) zwischen 10° und 15° aufgebracht ist.

6. Optisches Kabel nach einem der vorhergehenden Ansprüche,
**dadurch gekennzeichnet,**
daß der Kabelmantel (AM) schwach elektrisch leitend ausgebildet ist, derart daß der spezifische Widerstand zwischen 10⁷ Ω·cm und 10¹² Ω·cm liegt.

7. Optisches Kabel nach einem der vorhergehenden Ansprüche,
**dadurch gekennzeichnet,**
daß der Isolationswiderstand des gesamten optischen Kabels (OC) zwischen 10¹⁰ Ω/m und 10⁷ Ω/m liegt.

8. Optisches Kabel nach einem der vorhergehenden Ansprüche,
**dadurch gekennzeichnet,**
daß der Kabelmantel (AM) und/oder der Tragkörper (TK) einen Zusatz von Aluminiumhydroxid und/oder ionogenen Material aufweisen.

9. Optisches Kabel nach einem der vorhergehenden Ansprüche,
**dadurch gekennzeichnet,**
daß die Bandage (BD1, BD2) mit ionogenen Material imprägniert ist oder aus ionogen gemachten Filamenten besteht.

## Claims

1. Metal-free, self-supporting optical cable (OK) comprising a cable core and a cable sheath and intended for use as an aerial cable in the field region between the phase cables of a high-voltage overhead line, in which the cable core is constructed to be weakly electrically conductive and a carrier member (TK) in the form of at least one layer of high-strength filament material is provided as carrying element, characterised in that the filament material is held together by a bandage (BD1) which is firmly applied on the outside, comprises a material having at least similar electrical properties, and is applied with a shorter length of lay (β) than that (α) of the filament material, and in that the resistivity of the carrier member (TK) and of the bandage (BD1) is between 10⁵ and 10¹⁰ Ω·cm.

2. Optical cable according to Claim 1, characterised in that the filament material of the carrier member (TK) is applied with as large as possible an angle of lead, preferably about 85°.

3. Optical cable according to one of the preceding claims, characterised in that the bandage (BD1, BD2) is applied with an angle of lead (β) which is smaller by a factor of 1/3 to 1/10 than the angle of lead (α) of the filament material of the carrier member (TK).

4. Optical cable according to Claim 3, characterised in that in the event of single-lay application of the bandage the latter is applied with an angle of lay (β) of between 20° and 30°.

5. Optical cable according to Claim 3, characterised in that in the event of crossed double-lay application of the bandage (BD1, BD2) the latter is applied with an angle of lead (β) of between 10° and 15°.

6. Optical cable according to one of the preceding claims, characterised in that the cable sheath (AM) is constructed to be weakly electrically conductive in such a way that the resistivity is between 10⁷ Ω·cm and 10¹² Ω·cm.

7. Optical cable according to one of the preceding claims, characterised in that the insulation resistance of the entire optical cable (OC) is between 10¹⁰ Ω/m and 10⁷ Ω/m.

8. Optical cable according to one of the preceding claims, characterised in that the cable sheath (AM) and/or the carrier member (TK) have an additive of aluminium hydroxide and/or ionogenic material.

9. Optical cable according to one of the preceding claims, characterised in that the bandage (BD1, BD2) is impregnated with ionogenic material or comprises filaments rendered ionogenic.

## Revendications

1. Câble optique (OK) autoporteur exempt de métal, constitué d'une âme et une gaine et destiné à être utilisé en tant que câble aérien dans la zone de champ comprise entre les conducteurs de phase d'une ligne aérienne à haute tension, et dans lequel l'âme du câble étant constituée de manière à être faiblement conductrice du point de vue électrique et il est prévu, en tant qu'élément porteur, un support (TK) sous la forme d'au moins une couche en un matériau filamentaire très résistant, caractérisé par le fait que le matériau filamentaire est maintenu assemblé par un bandage (BD1) appliqué de façon fixe extérieurement et qui est en un matériau de caractéristiques électriques au moins similaires et est déposé avec un pas de câblage (β) inférieur à celui (α) du matériau filamentaire et que la résistivité du support (TK) et du bandage (BD1) est comprise entre 10⁵ et 10¹⁰ Ω·cm.

2. Câble optique suivant la revendication 1, caractérisé par le fait que le matériau filamentaire du support (TK) est déposé avec l'angle d'inclinaison le plus grand possible, de préférence de 85°.

3. Câble optique suivant l'une des revendications précédentes, caractérisé par le fait que le bandage (BD1, BD2) est appliqué avec un angle d'inclinaison (β) qui est inférieur, du facteur 1/3 à 1/10, à l'angle d'inclinaison (α) du matériau filamentaire du corps de support (TK).

4. Câble optique suivant la revendication 3, caractérisé par le fait que dans le cas d'une application du bandage avec un pas simple, ce bandage est appliqué avec un angle d'inclinaison (β) compris entre 20° et 30°.

5. Câble optique suivant la revendication 3, caractérisé par le fait que, dans le cas d'une application croisée et à double pas du bandage (BD1, BD2), ce dernier est appliqué avec un angle d'inclinaison (β) compris entre 10° et 15°.

6. Câble optique suivant l'une des revendications précédentes, caractérisé par le fait que la gaine (AM) du câble est constituée de manière à être faiblement conductrice du point de vue électrique de telle sorte que la résistivité soit comprise entre 10⁷ Ω.cm et 10¹² Ω.cm.

7. Câble optique suivant l'une des revendications précédentes, caractérisé par le fait que la résistance d'isolation de l'ensemble du câble optique (OC) est comprise entre 10¹⁰ Ω/m et 10⁷ Ω/m.

8. Câble optique suivant l'une des revendications précédentes, caractérisé par le fait que la gaine (AM) du câble et/ou le support (TK) comportent une addition d'hydroxyde d'aluminium et/ou d'une substance ionogène.

9. Câble optique suivant l'une des revendications précédentes, caractérisé par le fait que le bandage (BD1, BD2) est imprégné d'une substance ionogène ou est constitué de filaments rendus ionogènes.
